Europäisches Patentamt

European Patent Office

Office européen des brevets

(11) Veröffentlichungsnummer: **0 386 660**
**A1**

# (12) EUROPÄISCHE PATENTANMELDUNG

(21) Anmeldenummer: 90104132.7

(22) Anmeldetag: 02.03.90

(51) Int. Cl.5: **G01N 27/02, G01R 27/22**

(30) Priorität: 10.03.89 DE 8902974 U

(43) Veröffentlichungstag der Anmeldung:
**12.09.90 Patentblatt 90/37**

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Schmidt, Karl-Heinz, Dr.**
**Plättigstr. 4**
**D-7505 Ettlingen(DE)**

(54) **Leitfähigkeits-Messwertaufnehmer.**

(57) In der Stirnfläche (2, 2') eines zylindrischen Trägerkörpers (1) aus Isolierstoff sind vier konzentrische Metallringe als Elektroden (E1 bis E4) für einen Leitfähigkeits-Meßwertaufnehmer angebracht, die plan mit der Stirnfläche (2, 2') abschließen. Der Aufnehmer läßt sich so in Leitungen oder Behälter bündig mit der Innenfläche von deren Wandung einsetzen. Werden die Elektroden als hohlzylindrische Metallringe geringer Bauhöhe ausgebildet, die koaxial zur Mittelachse des Trägerkörpers angeordnet sind, läßt sich die Stirnfläche des Aufnehmers konkav ausbilden und der Krümmung der Wandfläche eines Behälters anpassen.

Die Erfindung wird angewandt bei Leitfähigkeits-Meßwertaufnehmern.

FIG 1

EP 0 386 660 A1

## Leitfähigkeits-Meßwertaufnehmer

Die Erfindung bezieht sich auf einen Meßwertaufnehmer zur Messung der elektrischen Leitfähigkeit von Fluiden, mit vier in der Stirnfläche eines Trägerkörpers aus Isolierstoff angeordneten Elektroden.

Es besteht die Aufgabe, einen derartigen Meßwertaufnehmer vom Streufeldtyp derart auszubilden, daß er mit seiner Stirnfläche und den Elektroden in einer Ebene mit der Innenfläche einer Behälter- oder Leitungswand eingebaut werden kann. Dabei ist der Wandeinfluß der metallischen Behälterwand auf das Streufeld möglichst gering zu halten.

Eine Lösung der Aufgabe wird in einem Meßwertaufnehmer der eingangs genannten Art gesehen, der die Merkmale des Anspruchs 1 aufweist. Durch die konzentrische Anordnung der ringförmig ausgebildeten Elektroden wird der Wandeinfluß auf das Streufeld vernachlässigbar klein.

Bei einer bevorzugten Ausführungsform sind die Elektroden koaxial zur Mittelachse des Trägerkörpers angeordnete Hohlzylinder, so daß in bestimmten Grenzen auch eine konkave Ausbildung der Stirnfläche zur Anpassung an gekrümmte Wandflächen von Leitungen oder Behältern möglich ist.

Zur Erläuterung der Erfindung sind in den Figuren 1 bis 4 Ausführungs- und Einbaubeispiele dargestellt und im folgenden beschrieben.

Es zeigen

Figur 1 einen Teillängsschnitt durch einen Meßwertaufnehmer,

Figur 2 eine Ansicht von dessen Stirnfläche mit den Elektroden,

Figur 3 einen Teillängsschnitt durch eine Ausführung mit Widerstandsthermometer,

Figur 4 ein Einbaubeispiel.

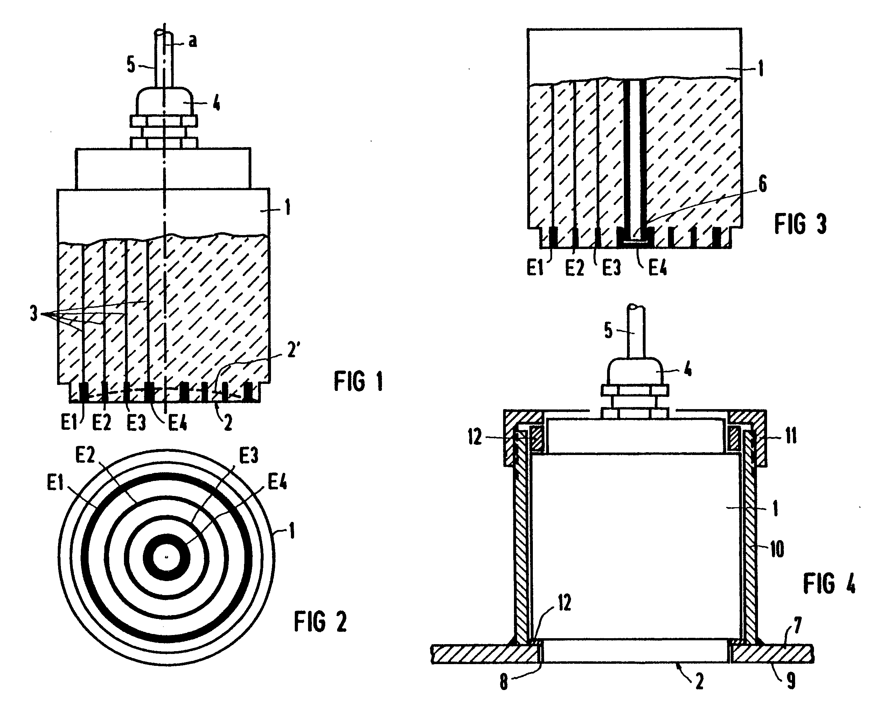

Wie Figur 1 zeigt, besteht der Meßwertaufnehmer im wesentlichen aus einem zylindrischen Trägerkörper 1 aus Isolierstoff, in dessen Stirnfläche 2 vier, die Elektroden E1, E2, E3 und E4 eines 4-Ring-Streufeld-Meßwertaufnehmers bildende Metallringe konzentrisch angeordnet sind (siehe Figur 2).

Von den Elektroden E1 bis E4 führen Anschlußleitungen 3 durch den Trägerkörper 1 zu einem Anschlußkopf 4, und von dort zu einem Anschlußkabel 5.

Die Elektroden E1 und E4 größeren Querschnitts sind als Stromelektroden geschaltet, die Elektroden E2 und E3 als Spannungselektroden, mit denen der Spannungsabfall in dem als Widerstand wirkenden Fluid leistungslos gemessen und damit dessen Leitfähigkeit bestimmt wird.

In einer bevorzugten Ausführungsform sind die Elektrodenringe als koaxial zur Mittelachse a des Trägerkörpers 1 angeordnete Hohlzylinder ausgebildet.

Dadurch ist es durch entsprechende Bearbeitung möglich, anstelle der planen Stirnfläche 2 eine konkave Stirnfläche 2' - wie gestrichelt angedeutet - herzustellen, die sich den Konturen der Wandinnenfläche am Einbauort anpassen läßt.

In Figur 3 ist eine andere Ausführungsform des Meßwertaufnehmers dargestellt. Die mittlere Elektrode E4' ist hier napfförmig ausgebildet und dient als Aufnahme für ein Widerstandsthermometer 6, welches zur Kompensation der Temperaturabhängigkeit der Leitfähigkeit in bekannter Weise eingesetzt wird.

In Figur 4 ist der Einbau das Meßwertaufnehmers in die Wand 7 eines Behälters dargestellt. Der Meßwertaufnehmer wird dazu mit seinem abgesetzten unteren Ende durch eine zylindrische Öffnung 8 in der Behälterwand 7 geführt, so daß seine Stirnfläche 2 mit der Innenfläche 9 der Behälterwand 7 in einer Ebene liegt. Der

Trägerkörper 1 ist in einem die Öffnung 8 umschließenden Rohrstutzen 10 mit einer Überwurfmutter 11 unter Zwischenlage von Dichtungen 12 verschraubt.

## Ansprüche

1. Meßwertaufnehmer für die Messung der elektrischen Leitfähigkeit von Fluiden mit vier in der Stirnfläche eines Trägerkörpers aus Isolierstoff angeordneten Elektroden, **dadurch gekennzeichnet,** daß die vier Elektroden (E1 bis E4) als konzentrische Metallringe in einer Ebene mit der Stirnfläche (2) in dieser angeordnet sind.

2. Meßwertaufnehmer nach Anspruch 1, **dadurch gekennzeichnet,** daß die Metallringe koaxial zur Mittelachse des Trägerkörpers (1) angeordnete Hohlzylinder sind.

3. Meßwertaufnehmer nach Anspruch 1 oder 2, **dadurch gekennzeichnet,** daß die Mittelelektrode (E4') als Aufnahme für ein Widerstandsthermometer (6) napfförmig ausgebildet ist.

89 P 4416 E

FIG 3

FIG 4

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 837 102 (MALCOM-ELLIS LTD) * gesamtes Dokument * | 1-3 | G 01 N 27/02 G 01 R 27/22 |
| A | DE-B-2 328 959 (FRIEDRICH KRUPP) * gesamtes Dokument * | 1-3 | |

RECHERCHIERTE SACHGEBIETE (Int. Cl.5)

G 01 N 27/02
G 01 R 27/22

Der vorliegende Recherchenbericht wurde für alle Patentansprüche erstellt

| Recherchenort | Abschlußdatum der Recherche | Prüfer |
|---|---|---|
| BERLIN | 18-04-1990 | LEMMERICH J |